# EUROPEAN PATENT SPECIFICATION

(11) **EP 4 347 196 B1**
(45) Date of publication and mention of the grant of the patent: **12.03.2025**
(21) Application number: 21742173.4
(22) Date of filing: 02.06.2021
(51) Int. Cl.: B25J 15/00, B25J 15/02, B65G 47/86, B65G 47/90

(54) **GRIPPER JAW ASSEMBLY**
GREIFERBACKENANORDNUNG
ENSEMBLE MÂCHOIRE DE PRÉHENSION

(43) Date of publication of application: 10.04.2024
(73) Proprietor: UAB "Terekas", 97133 Kretinga (LT)
(72) Inventor: TARASOVAS, Andrius, Palanga (LT)
(74) Representative: AAA Law
(86) International application number: PCT/IB2021/054827
(87) International publication number: WO 2022/254242

(56) References cited:
- GB-A- 2 406 321
- US-A1- 2013 243 895
- US-A1- 2014 008 927
- US-A1- 2021 094 765

## Description

### Technical Field

The invention relates to transfer device grippers used in production lines for plastic products, and, more particularly, to the jaws of transfer device grippers for gripping bottle preforms and blown bottles.

### Technical Level

In the manufacture of PET products, jaws are such parts that are attached to pneumatic or electric grippers, which are used to grip a PET or PP or other plastic preform or product being moved, overturned, carried out, or otherwise manipulated.

Typically, an equipment for PET product production lines includes mechanisms with series of grippers to transfer preforms and subsequent products. To increase the efficiency of such equipment, a single device manipulates 2, 3, 4 and more preforms simultaneously.

When working with small diameter PET preforms, the opening angle of the grippers is kept to a minimum, so the grippers can be positioned close to each other, thus increasing the performance of the machine and maintaining a small overall size of the unit.

If the size of the unit is not changed (the distance between the grippers is not increased), a problem is that as the diameter of the preform (R) increases, depending on the distance between the grippers (TG), it becomes impossible to open the gripper jaws (ZN) after reaching a certain preform diameter due to the jaws obstructing each other. This limits the flexibility of the equipment - the ability to use preforms over a larger range of preform diameter values with minimal equipment readjustments.

The main solutions available on the market are either to increase the distance between the grippers, which results in increase of the unit dimensions, or to grip every second preform, which results in reduced efficiency of the equipment.

U.S. Patent Application No. US14 / 005,636 (Publication No.US 2014 / 0008927A1) describes a conventional gripper with jaws. Each jaw includes: a recess, and a first clamping portion and a second locking portion. The first clamping portion of each gripper jaw includes a supporting surface, and when the gripper is closed around the preform, the support surface is designed to interact with the collar portion of the preform.

This invention does not have the disadvantages listed above and includes additional benefits such as ease of use, low weight and full recyclability.

### Summary of the invention

The invention discloses a jaw assembly for a transfer device gripper that includes at least two pairs of jaws. One pair is for one gripper. Each pair of jaws has a first jaw and a second jaw. Each first jaw includes a recess formed in the jaw portion of each first jaw interacting with the preform. Each second jaw includes a recess formed in the jaw portion of each second jaw interacting with the preform.

In all embodiments of the invention, with respect to one pair of jaws on one side, another pair of jaws is arranged adjacent to the first jaw, and yet another pair of jaws is arranged adjacent to the second jaw on the other side, wherein the first jaw and the second jaw of each pair of jaws interact with the second jaw and the first jaw of the other pair of jaws, respectively. The recesses penetrate each other and allow to obtain a larger opening angle of the pairs of jaws without changing the distance between the grippers. This way, by using the jaw assemblies according to the invention, with the same unit dimensions it is possible to have a greater flexibility and performance of the unit, as well as a wider range of preforms that can be used.

### Short Description of Drawings

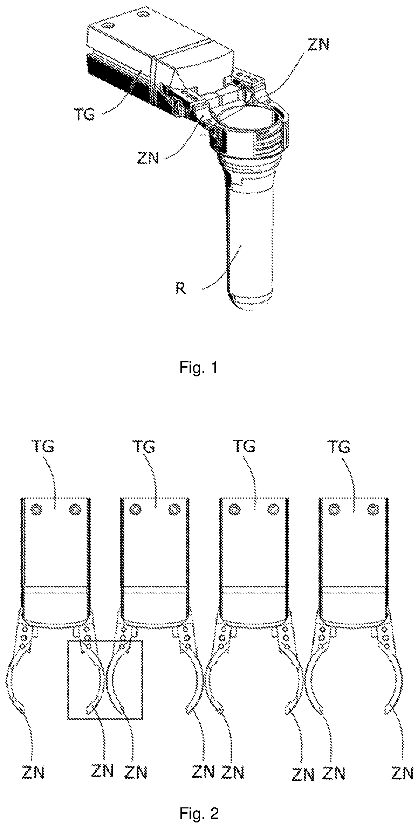

Fig. 1 shows a conventional gripper jaw assembly comprising two conventional gripper jaws. At the same time, an example is provided of how the jaws can be mounted in a gripper for gripping the preforms.
Fig. 2 shows a conventional gripper jaw assembly comprising eight conventional jaws that form four pairs of jaws. At the same time, an example is provided on how the jaws can be mounted on the gripper. Each pair of jaws is fully open to a position where the adjacent jaws of each pair are in contact with each other or are very close to each other and thus limit each other's opening angle.

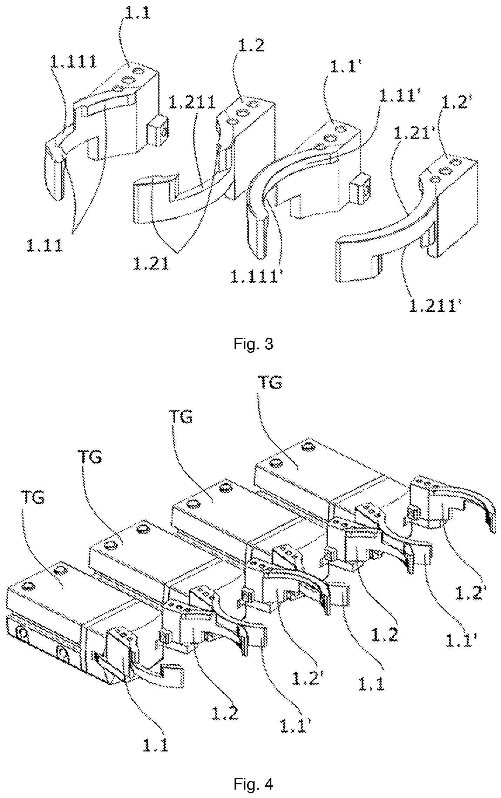

Fig. 3 shows the jaw assembly according to the first embodiment of the invention, wherein each jaw of the assembly comprises one recess at the central area of the jaws. The assembly includes four jaws with an increased jaw opening angle. The four jaws comprise two pairs of jaws, wherein the jaws on the opposite side of each pair of jaws, i.e. the second jaw of one pair and the first jaw of the other pair, may overlap each other at the central areas of the jaws.
Fig. 4 shows the jaw assembly according to the first embodiment of the invention. The assembly includes eight jaws making four pairs of jaws with an increased jaw opening angle. At the same time, the example is provided on how the jaws can be mounted in the gripper. The shown jaws are fully open and the jaws on the opposite side of each pair of jaws, i.e. the second jaw of one pair and the first jaw of the other pair, may overlap each other at the central areas of the jaws.

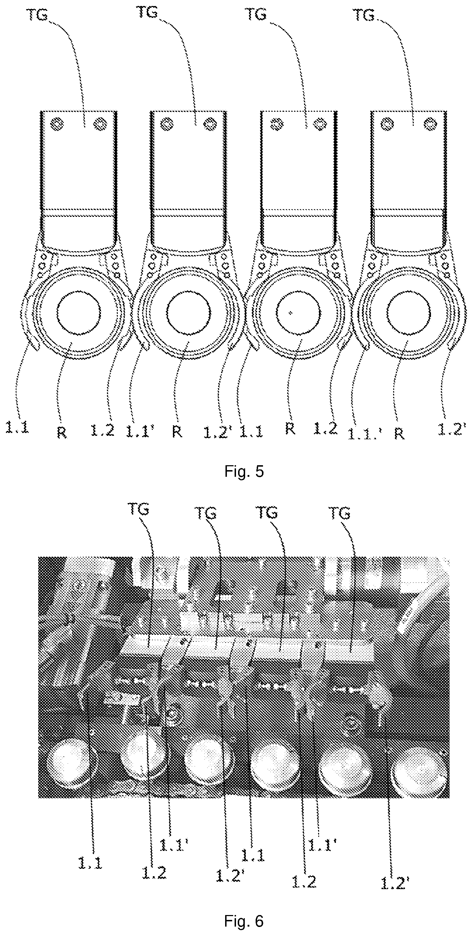

Fig. 5 shows the jaw assembly according to the first embodiment of the invention. The assembly includes eight jaws making four pairs of jaws. At the same time, the example is given on how the jaws can be mounted on the grippers and the preforms attached within them. The jaws are fully open and the jaws on the opposite side of each pair of jaws, i.e. the second jaw of one pair and the first jaw of the other pair, may overlap each other at the central areas of the jaws.
Fig. 6 shows the jaw assembly according to the first embodiment of the invention. The assembly includes eight jaws making four pairs of jaws. At the same time, the example is provided on how the jaws can be mounted on the grippers and the grippers being mounted on the PET product production line. The shown jaws are fully open and the jaws on the opposite side of each pair of jaws, i.e. the second jaw of one pair and the first jaw of the other pair, overlap each other at the central areas of the jaws.

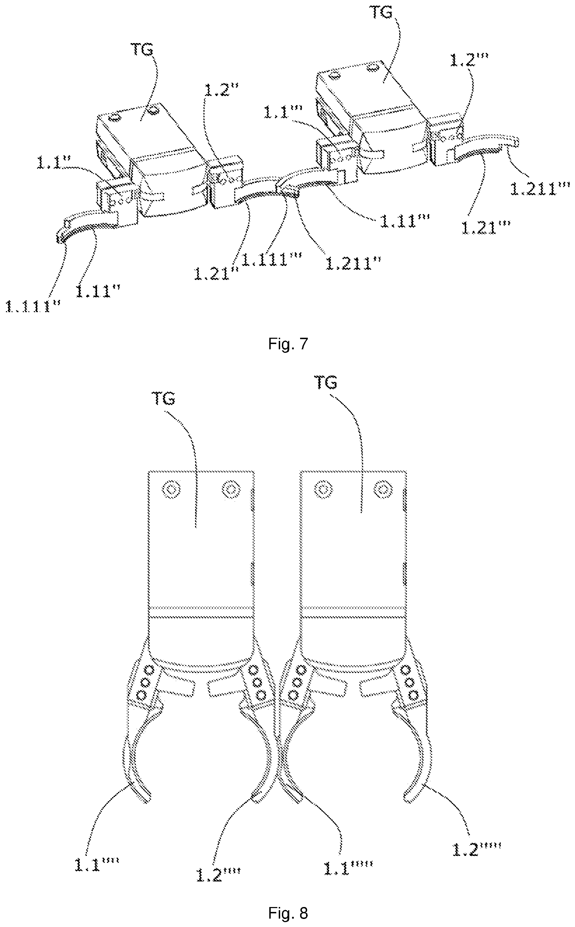

Fig. 7 shows the jaw assembly according to the second embodiment of the invention. The assembly includes four jaws making two pairs of jaws. At the same time, the example is provided on how the jaws can be mounted on the grippers where the jaws are fully open and where the jaws on the opposite side of each pair of jaws, i.e. the second jaw of one pair and the first jaw of the other pair, overlap each other at the free ends of the jaws.
Fig. 8 shows the jaw assembly according to the third embodiment of the invention. The assembly includes four jaws making two pairs of jaws. At the same time, the example is provided on how the jaws can be mounted on the gripper. The shown jaws are fully open and the jaws on the opposite side of each pair of jaws, i.e. the second jaw of one pair and the first jaw of the other pair, overlap each other at plurality of recesses.

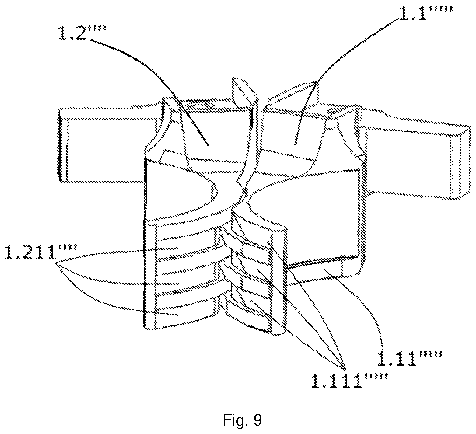

Fig. 9 shows the jaw assembly according to the third embodiment of the invention. Two pairs of opposite sides of the jaws are shown, where one pair of the second jaw and the other pair of first jaw overlap each other at the central areas of the jaws, at a plurality of recesses.

The most preferred embodiment of the invention are described below with references to the drawings. Each figure shows the same numbering of the same or equivalent item.

### Detailed description of embodiments of the invention

It should be understood that numerous specific details are set out in order to provide a complete and comprehensive description of the embodiment example of the invention. However, the skilled person will understand that the level of details of embodiment examples does not limit the embodiment of the invention, which can be embodied without such specific instructions. Well-known methods, procedures and components have not been described in detail to make sure that embodiment examples are not misleading. Furthermore, this description should not be construed as limiting exemplary embodiments provided, but merely as an implementation thereof.

Although exemplary embodiments of the invention, or aspects thereof, as illustrated and described, include many components that are depicted in a particular common space or location, some components may also be remote. It should also be understood that the examples given are not limited to the components described but also include other elements required for their functioning and interaction with other components, the existence of which is self-explanatory and therefore not detailed.

In all embodiments of the invention, the jaw assembly of the transfer grippers comprises at least one pair of jaws, preferably, at least two pairs of jaws. One pair is for one gripper (TG). Each pair of jaws has a first jaw (1.1, 1.1', 1.1", 1.1‴, 1.1ʺʺ, 1.1‴ʺ) and a second jaw (1.2, 1.2', 1.2", 1.2‴, 1.2ʺʺ, 1.2‴ʺ). Each first jaw (1.1, 1.1', 1.1", 1.1‴, 1,1ʺʺ, 1.1‴ʺ) has: a first end for attachment to the transfer gripper (TG) so that each the pair of gripper jaws is controlled to open the jaws and to grip the preform by closing them; and the other end, which is free. Each first jaw (1.1, 1.1', 1.1", 1.1‴, 1.1ʺʺ, 1.1‴ʺ) includes a shape that is adapted to conform to the shape of a specific preform so that the preform is gripped between the first and the second jaws of the transfer gripper in the horizontal plane and could not move at least in relation to the horizontal and vertical planes. The preform thus fixed should preferably have 0 degrees of freedom. Each first jaw (1.1, 1.1', 1.1", 1.1"', 1.1ʺʺ, 1.1‴ʺ) includes a preform locking edge (1.11, 1.11', 1.11", 1.11‴, 1.11ʺʺ, 1.11‴ʺ) for locking the preform along a vertical plane in respect to movement with the pair of edges in the gripping position of the preform. Each first jaw (1.1, 1.1', 1.1", 1.1‴, 1.1ʺʺ, 1.1‴ʺ) includes at least one recess (1.111, 1.111', 1.111", 1.111‴, 1.111ʺʺ, 1.111‴ʺ) made in the jaw portion of each first jaw (1.1, 1.1', 1.1", 1.1‴, 1.1ʺʺ, 1.1‴ʺ) interacting with the preform.

Every second jaw mentioned (1.2, 1.2', 1.2", 1.2‴,1.2ʺʺ, 1.2‴ʺ) has: a first end for attachment to the transfer gripper (TG) so that each pair of gripper jaws is controlled to open the jaws and to grip the preform by closing them; and the other end, which is free. Each second jaw (1.2, 1.2', 1.2", 1.2‴, 1.2ʺʺ, 1.2‴ʺ) includes a shape that is adapted to conform to the shape of a specific preform so that the preform is gripped between the first and the second jaws of the transfer gripper in the horizontal plane and could not move at least in relation to the horizontal and vertical planes. The preform thus fixed should preferably have 0 degrees of freedom. Each second jaw 1.2, 1.2', 1.2", 1.2‴, 1.2ʺʺ, 1.2‴ʺ) includes a preform locking edge (1.21, 1.21', 1.21", 1.21‴, 1.21ʺʺ, 1.21‴ʺ) for locking the preform along a vertical plane in respect to movement with the pair of edges in the gripping position of the preform. Each second jaw (1.2, 1.2', 1.2", 1.2‴, 1.2ʺʺ, 1.2‴ʺ) includes at least one recess (1.211, 1.211', 1.211", 1.211‴, 1.211ʺʺ, 1.2‴ʺ) made in the jaw portion of each first jaw (1.2, 1.2', 1.2", 1.2"', 1.2ʺʺ, 1.2‴ʺ) interacting with the preform.

The position and shape of at least one recess (1.111, 1.111', 1.111", 1.111‴, 1.111ʺʺ, 1.111‴ʺ) of the first jaw (1.1, 1.1', 1.1", 1.1‴, 1.1ʺʺ, 1.1‴ʺ) of each pair of jaws shall be such as to correspond to the location and shape of at least one recess (1.211, 1.211', 1.211", 1.211‴, 1.211ʺʺ, 1.211‴ʺ) of the second jaw (1.2, 1.2', 1.2", 1.2‴, 1.2ʺʺ, 1.2‴ʺ) of each other adjacent pair of jaws so that in the case of two adjacent pairs in the open state, the first jaw (1.1, 1.1', 1.1", 1.1‴,1.1ʺʺ, 1.1‴ʺ) of one pair of jaws at least partially overlaps the second jaw (1.2, 1.2', 1.2", 1.2‴, 1.2ʺʺ, 1.2‴ʺ) of another adjacent pair of jaws, the said two jaws passing each other.

The position and shape of at least one recess (1.211, 1.211', 1.211", 1.211‴, 1.211ʺʺ, 1.211‴ʺ) of the second jaw (1.2, 1.2', 1.2", 1.2‴, 1.2ʺʺ, 1.2‴ʺ) of each pair of jaws shall be such as to correspond to the location and shape of at least one recess (1.111, 1.111', 1.111", 1.111‴, 1.111ʺʺ, 1.111‴ʺ) of the first jaw (1.1, 1.1', 1.1", 1.1‴, 1.1ʺʺ, 1.1‴ʺ) of each other adjacent pair of jaws so that in the case of two adjacent pairs are in the open state, the second jaw (1.2, 1.2', 1.2", 1.2‴,1.2ʺʺ, 1.2‴ʺ) of one pair of jaws at least partially overlaps the first jaw (1.1, 1.1', 1.1", 1.1‴, 1.1ʺʺ, 1.1‴ʺ) of another adjacent pair of jaws. In this way, the opening angle of the pair of jaws is widened.

In all embodiments of the invention, the assembly comprising two and more pairs of jaws, the shape of the jaws and the position of the recesses is as follows:
- In one case, the shape of the first jaw (1.1, 1.1",1.1ʺʺ) of the first pair forming the assembly and the position of the recess (1.111, 1.111", 1.111ʺʺ) coincide with the shape of the second jaw (1.2, 1.2", 1.2ʺʺ) and the position of the recess (1.211, 1.211", 1.211ʺʺ) on the mirror image principle. The shape of the second jaw (1.1, 1.1",1.1ʺʺ) of the first pair forming the assembly and the position of the recess (1.111, 1.111", 1.111ʺʺ) coincide with the shape of the second jaw (1.2, 1.2", 1.2ʺʺ) and the position of the recess (1.211, 1.211", 1.211ʺʺ) on mirror image principle. The shape of the first jaw (1.1', 1.1‴,1.1‴ʺ) and position of recess (1.111', 1.111‴, 1.111‴ʺ) and the shape of the second jaw (1.2', 1.2‴, 1.2‴ʺ) and the position of recess (1.211', 1.211‴, 1.211‴ʺ) of the second pair respectively differ from the shape of the first jaw (1.1, 1.1",1.1ʺʺ) and the position of recess (1.111, 1.111", 1.111ʺʺ) and the position of the recess (1.211, 1.211", 1.211ʺʺ) of the second jaw (1.2, 1.2", 1.2ʺʺ): when the first pair of jaws and the second pair of jaws are fully open, at least part of the second jaw (1.2, 1.2", 1.2ʺʺ) of the first pair of jaws overlaps with at least part of the first jaw (1.1', 1.1‴,1.1‴ʺ) of the second pair of jaws as they pass each other. The arrangement of the further pairs after the second pair is the same as that of the first and the second pairs: the shape of the first jaw (1.1, 1.1",1.1ʺʺ) and the position of the recess (1.111, 1.111", 1.111ʺʺ) of the third pair forming the assembly coincides with the shape of the second jaw (1.2, 1.2", 1.2"") and the position of the recess (1.211, 1.211", 1.211ʺʺ) on the mirror image principle; the shape of the first jaw (1.1', 1.1‴,1.1‴ʺ) and the position of recess (1.111', 1.111‴, 1.111‴ʺ) of the fourth pair forming the assembly coincide with the shape of the second jaw (1.2', 1.2‴, 1.2‴ʺ) and the position of the recess (1.211', 1.211‴, 1.211‴ʺ) on the mirror image principle. The shape of the first jaw (1.1', 1.1‴,1.1‴ʺ) and position of recess (1.111', 1.111‴, 1.111‴ʺ) and the shape of the second jaw (1.2', 1.2‴, 1.2‴ʺ) and the position of recess (1.211', 1.211"', 1.211‴ʺ) of the fourth pair respectively differ from the shape of the first jaw (1.1, 1.1",1.1ʺʺ) and the position of recess (1.111, 1.111", 1.111ʺʺ) and the shape of the second jaw (1.2, 1.2", 1.2"") and the position of recess (1.211, 1.211", 1.211ʺʺ) of the third pair: when the third pair of jaws and the fourth pair of jaws are fully open, at least part of the second jaw (1.2, 1.2", 1.2ʺʺ) of the third pair of jaws overlaps with at least part of the first jaw (1.1', 1.1‴,1.1‴ʺ) of the fourth pair of jaws and at least part of the first jaw (1.1, 1.1",1.1ʺʺ) of the third pair of jaws overlaps with at least part of the second jaw (1.2', 1.2‴, 1.2‴ʺ) of the second pair of jaws as they pass each other. In this case, the jaw shape and recess positions of the first pair of jaws are the same as the jaw shape and recess positions of the third pair of jaws respectively, and the jaw shape and recess positions of the second pair of jaws are the same as the jaw shape and recess positions of the fourth pair of jaws. According to this principle, an unlimited number of pairs of jaws can be arranged, the jaws and recesses of every second pair of jaws being correspondingly substantially uniform in shape.
- Otherwise, the shape of the first jaw and the position of the recess of the first pair of jaws making the assembly coincide with the shape of the first jaw and the position of the recess of any other subsequent pair of jaws and the shape of the second jaw and the position of recess of the first pair of jaws coincides with the shape of the second jaw and the position of the recess of any other subsequent pair of jaws. When the first and the second jaw of any one pair of jaws and the first and second jaw of each pair of jaws adjacent to said one pair of jaws on both sides are fully open, the jaws of each other adjacent pair of jaws overlap at least partially. An unlimited number of pairs of jaws can be arranged based on such principle, where the shape of the first jaw and the position of the recess of each pair of jaws are the same, and where the shape of the second jaw and the position of the recess of each pair of jaws are the same.

In all embodiments of the invention, the number of pairs of jaws is unlimited, where with respect to one pair of jaws, on the one hand, another pair of jaws is arranged adjacent to the first jaw, and, on the other hand, yet another pair of jaws is arranged adjacent to the second jaw, wherein the first and second jaws of each pair interact with second and the first jaws of the other pair, respectively, as described above.

As used throughout the embodiments of the invention, the term transfer gripper (TG) refers to a conventional, pneumatic or electric transfer gripper (TG) used in the plastic product production lines.

In the first specific embodiment of the invention, as described above, as for all embodiments of the invention in general, and as shown in Figures 2-6, the invention is characterized in that the recesses (1.111, 1.111'; 1.211, 1.211') are formed at the central portions of jaws (1.1, 1.1'; 1.2, 1.2'), and each jaw (1.1, 1.1'; 1.2, 1.2') has one recess (1.111, 1.111'; 1.211, 1.211').

In the second specific embodiment of the invention, as described above, as for all embodiments of the invention in general, and as shown in Figure 7, the invention is characterized in that the recesses (1.111", 1.111‴; 1.211", 1.211‴) are formed at the free ends of jaws (1.1", 1.1‴; 1.2", 1.2‴), and each jaw (1.1, 1.1'; 1.2, 1.2') has one recess (1.111", 1.111‴; 1.211", 1.211‴).

In the third specific embodiment of the invention, as described above, as for all embodiments of the invention in general, and as shown in Figures 8 and 9, the invention is characterized in that the recesses (1.111ʺʺ, 1.111‴ʺ; 1.211ʺʺ, 1.211‴ʺ) are formed at the central portions of jaws (1.1ʺʺ, 1.1‴ʺ; 1.2ʺʺ, 1.2‴ʺ), and each jaw (1.1ʺʺ, 1.1‴ʺ; 1.2ʺʺ, 1.2‴ʺ) has a plurality of recess (1.111ʺʺ, 1.111‴ʺ; 1.211ʺʺ, 1.211‴ʺ) made on the outer portion of jaws, which interacts between jaws.

Jaws can be made in a variety of ways, but it is preferred that they are made by 3D printing. By using 3D printing technology, it is possible to model and produce a precise small parts, in which making recesses overlapping each other without changing the distance between the grippers results in a larger opening angle, thus making it possible to have greater installation flexibility and a wider range of usable preforms with the same size and efficiency of the unit.

Although the present description includes numerous characteristics and advantages of the invention together with structural details and features, the description is given as an example of the invention embodiment. There may be changes in the details, especially in the form, size and layout of materials without departing from the principles of the invention, in accordance with the widely understood definition of terms used in claims.

## Claims

1. *The gripper jaw assembly comprising at least two adjacent pairs of jaws for use in preform transfer grippers (TGs), each jaw comprising an end to be attached to the gripper and a free end, where each first jaw of the at least two adjacent pairs of jaws comprises at least one recess made in the portion of interaction of each first jaw with* a *preform, and each second jaw of the at least two adjacent pairs of jaws comprises at least one recess made in the portion of each second jaw interacting with the preform **characterized in that** at least one recess (1.111, 1.111', 1.111", 1.111‴, 1.111ʺʺ, 1.111‴ʺ) of the first jaw (1.1, 1.1'*, *1.1", 1.1*‴, *1.1ʺʺ*, *1.1‴ʺ*) *of one pair of jaws interacts with at least one recess (1.211, 1.211', 1.211", 1.211*‴*, 1.211*ʺʺ*, 1.211‴ʺ) of the second jaw (1.2, 1.2', 1.2", 1.2‴, 1.2ʺʺ, 1.2‴ʺ) of adjacent pair of jaws and at least one recess (1.211, 1.211', 1.211", 1.211*‴*, 1.211*ʺʺ*, 1.211‴ʺ) of the second jaw (1.2, 1.2', 1.2", 1.2*‴, *1.2ʺʺ, 1.2‴ʺ) of one pair of jaws interacts with at least one recess (1.111, 1.111', 1.111", 1.111‴, 1.111ʺʺ, 1.111‴ʺ) of the first jaw (1.1, 1.1', 1.1", 1.1‴, 1.1*ʺʺ, 1.1‴ʺ) *of adjacent pair of jaws so that when two adjacent pairs are in open state, the first jaw (1.1, 1.1'*, *1.1"*, *1.1*‴, *1.1*ʺʺ, *1.1‴*ʺ*) of one pair of* jaws *at least partially overlaps with the second jaw (1.2,* 1.2', *1.2", 1.2"',* 1.2ʺʺ, *1.2*‴ʺ*) of another adjacent pair of jaws and the second jaw (1.2,* 1.2', *1.2", 1.2‴, 1.2ʺʺ, 1.2*ʺʺ′*) of one pair of jaws at least partially overlaps with the first jaw (1.1, 1.1'*, *1.1"*, *1.1*‴, *1.1*ʺʺ*) of another adjacent pair of jaws when both said jaws pass each other.*

2. The gripper jaw assembly according to claim 1, wherein said recesses (1.111, 1.111', 1.111", 1.111‴, 1.111ʺʺ, 1.111‴ʺ; 1.211, 1.211', 1.211", 1.211‴, 1.211ʺʺ, 1.211‴ʺ) are made at free ends of the first jaws (1.1, 1.1', 1.1", 1.1‴, 1.1ʺʺ, 1.1‴ʺ) and the second jaws (1.2, 1.2', 1.2", 1.2‴, 1.2ʺʺ, 1.2‴ʺ), respectively.

3. The gripper jaw assembly according to claim 1, wherein said recesses (1.111, 1.111', 1.111", 1.111‴, 1.111ʺʺ, 1.111‴ʺ; 1.211, 1.211', 1.211", 1.211‴, 1.211ʺʺ, 1.211‴ʺ) are made at central portions of the first jaws (1.1, 1.1', 1.1", 1.1‴, 1.1ʺʺ, 1.1‴ʺ) and the second jaws (1.2, 1.2', 1.2", 1.2‴, 1.2ʺʺ, 1.2‴ʺ), respectively.

4. The gripper jaw assembly according to claim 1, wherein said recesses (1.111, 1.111', 1.111", 1.111‴, 1.111ʺʺ, 1.111‴ʺ; 1.211, 1.211', 1.211", 1.211‴, 1.211ʺʺ, 1.211‴ʺ) are made at outer portions of the first jaws (1.1, 1.1', 1.1", 1.1‴, 1.1ʺʺ, 1.1‴ʺ) and the second jaws (1.2, 1.2', 1.2", 1.2‴, 1.2ʺʺ, 1.2‴ʺ), where they interact, respectively, and each jaw has a plurality of recesses.

## Patentansprüche

1. Greiferbackenanordnung, umfassend mindestens zwei benachbarte Backenpaare zur Verwendung in Vorformlingsumsetzgreifern (transfer grippers - TG), wobei jede Backe ein an dem Greifer zu befestigendes Ende und ein freies Ende umfasst, wobei jede erste Backe der mindestens zwei benachbarten Backenpaare mindestens eine Aussparung umfasst, die in dem Abschnitt des Zusammenwirkens jeder ersten Backe mit einem Vorformling ausgebildet ist, und jede zweite Backe der mindestens zwei benachbarten Backenpaare mindestens eine Aussparung umfasst, die in dem Abschnitt jeder zweiten Backe ausgebildet ist, die mit dem Vorformling zusammenwirkt, **dadurch gekennzeichnet, dass** mindestens eine Aussparung (1.111, 1.111', 1.111", 1.111‴, 1.111ʺʺ, 1.111‴ʺ) der ersten Backe (1.1, 1.1', 1.1", 1.1‴, 1.1ʺʺ, 1.1‴ʺ) eines Backenpaares mit mindestens einer Aussparung (1.211, 1.211', 1.211", 1.211‴, 1.211ʺʺ, 1.211‴ʺ) der zweiten Backe (1.2, 1.2', 1.2", 1.2‴, 1.2ʺʺ, 1.2ʺʺ) des benachbarten Backenpaares zusammenwirkt und mindestens eine Aussparung (1.211, 1.211', 1.211", 1.211‴, 1.211ʺʺ, 1.211‴ʺ) der zweiten Backe (1.2, 1.2', 1.2", 1.2‴, 1.2ʺʺ, 1.2‴ʺ) eines Backenpaares mit mindestens einer Aussparung (1.111, 1.111', 1.111", 1.111‴, 1.111ʺʺ, 1.111‴ʺ) der ersten Backe (1.1, 1.1', 1.1", 1.1‴, 1.1ʺʺ, 1.1‴ʺ) des benachbarten Backenpaares zusammenwirkt, sodass, wenn sich zwei benachbarte Paare in einem geöffneten Zustand befinden, sich die erste Backe (1.1, 1.1', 1.1", 1.1‴, 1.1ʺʺ, 1.1‴ʺ) eines Backenpaares mindestens teilweise mit der zweiten Backe (1.2, 1.2', 1.2", 1.2‴, 1.2ʺʺ, 1.2‴ʺ) eines anderen benachbarten Backenpaares überlappt und sich die zweite Backe (1.2, 1.2', 1.2", 1.2‴, 1.2ʺʺ, 1.2‴ʺ) eines Backenpaares mindestens teilweise mit der ersten Backe (1.1, 1.1', 1.1", 1.1‴, 1.1ʺʺ) eines anderen benachbarten Backenpaares überlappt, wenn beide Backen aneinander vorbeigehen.

2. Greiferbackenanordnung nach Anspruch 1, wobei die Aussparungen (1.111, 1.111', 1.111", 1.111‴, 1.111ʺʺ, 1.111‴ʺ; 1.211, 1.211' 1.211", 1.211‴, 1.211ʺʺ, 1.211‴ʺ) an freien Enden der ersten Backen (1.1, 1.1', 1.1", 1.1‴, 1.1ʺʺ, 1.1‴ʺ) bzw. der zweiten Backen (1.2, 1.2', 1.2", 1.2‴, 1.2ʺʺ, 1.2‴ʺ) ausgebildet sind.

3. Greiferbackenanordnung nach Anspruch 1, wobei die Aussparungen (1.111, 1.111', 1.111'', 1.111‴, 1.111ʺʺ, 1.111‴ʺ; 1.211, 1.211' 1.211", 1.211‴, 1.211ʺʺ, 1.211‴ʺ) an zentralen Abschnitten der ersten Backen (1.1, 1.1', 1.1", 1.1‴, 1.1ʺʺ, 1.1‴ʺ) bzw. der zweiten Backen (1.2, 1.2', 1.2", 1.2‴, 1.2ʺʺ, 1.2‴ʺ) ausgebildet sind.

4. Greiferbackenanordnung nach Anspruch 1, wobei die Aussparungen (1.111, 1.111', 1.111'', 1.111‴, 1.111ʺʺ, 1.111‴ʺ; 1.211, 1.211' 1.211", 1.211‴, 1.211ʺʺ, 1.211‴ʺ) an äußeren Abschnitten der ersten Backen (1.1, 1.1', 1.1", 1.1‴, 1.1ʺʺ, 1.1‴ʺ) und der zweiten Backen (1.2, 1.2', 1.2", 1.2‴, 1.2ʺʺ, 1.2‴ʺ) ausgebildet sind, wo sie jeweils zusammenwirken, und jede Backe eine Vielzahl von Aussparungen aufweist.

## Revendications

1. Ensemble mâchoire de préhension comprenant au moins deux paires adjacentes de mâchoires destinées à être utilisées dans des pinces de transfert de préformes (TG), chaque mâchoire comprenant une extrémité à fixer à la pince et une extrémité libre, où chaque première mâchoire des au moins deux paires adjacentes de mâchoires comprend au moins un évidement réalisé dans la partie d'interaction de chaque première mâchoire avec une préforme, et chaque seconde mâchoire des au moins deux paires adjacentes de mâchoires comprend au moins un évidement réalisé dans la partie de chaque seconde mâchoire interagissant avec la préforme, **caractérisé en ce qu'**au moins un évidement (1.111, 1.111', 1.111", 1.111‴, 1.111ʺʺ, 1.111‴ʺ) de la première mâchoire (1.1, 1.1', 1.1", 1.1‴, 1.1ʺʺ, 1.1‴ʺ) d'une paire de mâchoires interagit avec au moins un évidement (1.211, 1.211', 1.211", 1.211‴, 1.211ʺʺ, 1.211‴ʺ) de la seconde mâchoire (1.2, 1.2', 1.2", 1.2‴, 1.211ʺʺ, 1.2''''') de la paire de mâchoires adjacente et au moins un évidement (1.211, 1.211', 1.211", 1.211‴, 1.211ʺʺ, 1.211‴ʺ) de la seconde mâchoire (1.2, 1.2', 1.2", 1.2"', 1.211ʺʺ, 1.2ʺʺ) d'une paire de mâchoires interagit avec au moins un évidement (1.111, 1.111', 1.111", 1.111‴, 1.111ʺʺ, 1.111‴ʺ) de la première mâchoire (1.1, 1.1', 1.1", 1.1‴, 1.1ʺʺ, 1.1‴ʺ) d'une paire de mâchoires adjacente de sorte que lorsque deux paires adjacentes sont dans un état ouvert, la première mâchoire (1.1, 1.1', 1.1", 1.1‴, 1.1ʺʺ, 1.1‴ʺ) d'une paire de mâchoires chevauche au moins partiellement la seconde mâchoire (1.2, 1.2', 1.2", 1.2‴, 1.211ʺʺ, 1.2‴ʺ) d'une autre paire de mâchoires adjacente et la seconde mâchoire (1.2, 1.2' , 1.2", 1.2‴, 1.211ʺʺ, 1.2‴ʺ) d'une paire de mâchoires chevauche au moins partiellement la première mâchoire (1.1, 1.1', 1.1", 1.1‴, 1.1ʺʺ) d'une autre paire de mâchoires adjacente lorsque lesdites deux mâchoires se croisent.

2. Ensemble mâchoire de préhension selon la revendication 1, dans lequel lesdits évidements (1.111, 1.111', 1.111", 1.111‴, 1.111‴, 1.111ʺʺ, 1.111‴ʺ; 1.211, 1.211', 1.211", 1.211‴, 1.211ʺʺ, 1.211‴ʺ) sont réalisés aux extrémités libres des premières mâchoires (1.1, 1.1', 1.1", 1.1‴, 1.1‴, 1.1‴ʺ) et des secondes mâchoires (1.2, 1.2', 1.2", 1.2‴, 1.211ʺʺ, 1.2ʺʺ), respectivement.

3. Ensemble mâchoire de préhension selon la revendication 1, dans lequel lesdits évidements (1.111, 1.111', 1.111", 1.111‴, 1.111‴, 1.111ʺʺ, 1.111‴ʺ; 1.211, 1.211', 1.211", 1.211‴, 1.211ʺʺ, 1.211‴ʺ) sont réalisés au niveau des parties centrales des premières mâchoires (1.1, 1.1', 1.1", 1.1‴, 1.1‴, 1.1‴ʺ) et des secondes mâchoires (1.2, 1.2', 1.2", 1.2‴, 1.211ʺʺ, 1.2‴ʺ), respectivement.

4. Ensemble mâchoire de préhension selon la revendication 1, dans lequel lesdits évidements (1.111, 1.111', 1.111", 1.111‴, 1.111‴, 1.111ʺʺ, 1.111‴ʺ; 1.211, 1.211', 1.211", 1.211‴, 1.211ʺʺ, 1.211‴ʺ) sont réalisés au niveau des parties extérieures des premières mâchoires (1.1, 1.1', 1.1", 1.1‴, 1.1‴, 1.1ʺʺ, 1.1‴ʺ) et des secondes mâchoires (1.2, 1.2', 1.2", 1.2‴, 1.211ʺʺ, 1.2‴ʺ), où elles interagissent, respectivement, et chaque mâchoire comporte une pluralité d'évidements.
